# FASCICULE DE BREVET EUROPEEN

(11) **EP 3 228 944 B1**
(45) Date de publication et mention de la délivrance du brevet: **12.08.2020**
(21) Numéro de dépôt: 17164648.2
(22) Date de dépôt: 03.04.2017
(51) Int. Cl.: F24D 3/14, F16L 3/223

(54) **DISPOSITIF DE FIXATION DE CONDUITS SUR UN IMMEUBLE**
VORRICHTUNG ZUM BEFESTIGEN VON LEITUNGEN AN EINEM GEBÄUDE
DEVICE FOR ATTACHING PIPES TO A BUILDING

(30) Priorité: 04.04.2016 FR 1600568
(43) Date de publication de la demande: 11.10.2017
(73) Titulaire: MissiM, 78000 Versailles (FR)
(72) Inventeur: Le Roux, Dominique, 78000 Versailles (FR)
(74) Mandataire: Célanie, Christian

(56) Documents cités:
- EP-A2- 1 493 973
- AT-B- 362 913
- DE-A1- 1 929 529
- DE-A1- 1 966 975
- DE-U1- 29 604 148

## Description

Le secteur technique de la présente invention est relatif à la rénovation d'immeubles en vue de faciliter l'apport des différents fluides. Le document AT 362 913 b divulgue un dispositif destiné à la rénovation d'un immeuble, le dispositif comprenant un conduit pour fluide de maintien en température ainsi qu'une plaque de réception fixée sur la façade extérieure de l'immeuble par l'intermédiaire de pions de fixation, la plaque étant munie de plots externes espacés les uns des autres pour recevoir du côté externe le conduit pour fluide de maintien en température.

Au cours de la rénovation d'un immeuble, il est souvent nécessaire d'évacuer entièrement les différents appartements ce qui occasionne d'innombrables difficultés.

Si dans le cas d'une construction neuve, la conception énergétique est intégrée d'office dès les premiers stades du projet et se trouve relayée par une large offre de solutions industrialisées, il s'avère que la rénovation du bâti ancien doit bien souvent composer avec des choix bien limités. Cette limite s'explique par un plus grand nombre de contraintes relatives au respect de l'ancien dans sa forme matérielle (conservation d'un maximum d'éléments constructifs et de matériaux d'époque) comme dans sa forme architectonique (volume, dimensions, aspect, etc...). Celles-ci sont d'autant plus grandes lorsque le bâtiment en question fait l'objet de mesure de protection (secteurs sauvegardés, inscription aux monuments historiques, etc...) .

Quant aux bâtiments de bureaux construits entre les années 1950-2000 ils se trouvent généralement condamnés à une obsolescence anticipée du fait de leur faible rendement énergétique. L'intervention sur de telles structures s'avère souvent peu rentable au vu des gains obtenus et des contraintes de chantier qui peuvent devenir dissuasives au vu des nuisances engendrées et peut nécessiter un transfert temporaire des activités, entraînant des coûts supplémentaires. C'est pourquoi, dans bien des cas, le choix de la démolition pure et simple est fait eu égard aux qualités, à l'identité et à la valeur architecturale du bâtiment.

Au cours de cette rénovation, il faut modifier les apports des différents fluides, en ajouter éventuellement, ce qui rend plus complexe une rénovation performante. Généralement, l'apport de ces fluides implique l'intégration de différents conduits, la modification des conduits existants, etc...

Dans ce contexte, les solutions à adopter doivent produire un minimum d'impact sur la construction existante et sur son bon fonctionnement (nuisances), tout en permettant une optimisation du bilan énergétique à savoir la diminution de la consommation en ressources, augmentation de l'inertie thermique, usage du bioclimatique. L'intervention sur l'enveloppe du bâtiment devient dès lors le mode d'action privilégié. Il s'agit donc de traiter l'ensemble des interfaces du bâtiment avec son milieu ambiant : façades, toitures, sous-sol, menuiseries, entrées et sorties de réseaux d'échange d'air.

Par conséquent, il existe une réelle problématique d'intervention dès lors que se pose la question de la rénovation énergétique d'un bâtiment existant et plus généralement de sa rénovation intérieure. En raison du coût des matières premières, il convient de considérer la conservation du bâti ancien comme une priorité majeure. A ce titre il s'agit pour l'architecte de concilier cet objectif avec les enjeux de la rénovation énergétique.

Par ailleurs, lors de la rénovation d'un bâtiment, les travaux sur le réseau chauffage, ventilation, climatisation sont à la fois les plus destructeurs, les plus coûteux, les plus longs dans le temps, les plus nuisibles tout en demeurant les plus cruciaux dans le gain énergétique visé. Ceci est d'autant plus notable lorsqu'on vise l'obtention de labels énergétiques et/ou environnementaux notamment.

C'est donc dans cette perspective que l'inventeur s'est investi dans une stratégie globale : concilier la durabilité énergétique et architecturale et la refonte des réseaux eau, air, gaz, courants faible et fort, chauffage, rafraîchissement, ventilation, tout en respectant l'architecture existante, la réversibilité et l'environnement visuel.

L'inventeur a donc effectué une étude pour déterminer la manière la plus économique de rénover un immeuble et a donc imaginé d'amener les différents fluides par l'extérieur de l'immeuble à la fois pour le maintien en température et l'alimentation du bâtiment. C'est dans cette perspective qu'un dispositif de fixation a été conçu pour recevoir, sécuriser, protéger ces différents apports de fluides sur la façade extérieure d'un bâtiment.

L'invention vise à fournir des moyens permettant de rénover un immeuble sans l'évacuation des occupants tout en provoquant le minimum de gêne pour ces occupants.

L'invention a donc pour objet un dispositif selon la revendication 1.

Selon une caractéristique de l'invention, le conduit de maintien en température se présente sous la forme d'un serpentin inséré entre les plots internes.

Selon une autre caractéristique de l'invention, chaque conduit d'apport est inséré entre les plots externes alignés sur une génératrice de la plaque.

Selon encore une autre caractéristique de l'invention, l'ensemble des conduits d'apport sont notamment les conduits d'eau froide, d'eau chaude, de gaz, de conducteurs électriques.

Selon encore une autre caractéristique de l'invention, les conduits sont maintenus à l'aide d'au moins une barre de blocage fixée sur deux plots éloignés l'un de l'autre.

Selon encore une autre caractéristique de l'invention, la plaque de réception se présente sous la forme d'une plaque isolante rigide d'un seul bloc avec les plots internes et externes, par exemple du type polystyrène extrudé.

Avantageusement, les plots se présentent sous la forme d'éléments cylindriques.

Avantageusement encore, la hauteur des plots internes et externes est égale au diamètre des conduits insérés entre ceux-ci.

Selon encore une autre caractéristique de l'invention, le dispositif comporte un module d'isolation thermique fixé à la plaque de réception.

Selon encore une autre caractéristique de l'invention, le dispositif comprend un des conduits transversaux et module de ventilation muni d'un échangeur pour le réglage de la température d'une pièce de l'immeuble auquel sont connectés les conduits eau chaude, eau glacée, retour eau glacée et retour eau chaude par l'intermédiaire des conduits transversaux respectifs.

Avantageusement, les conduits transversaux sont reliés au module de ventilation par l'intermédiaire des vannes d'isolement et de régulation respectives.

Selon encore une autre caractéristique de l'invention, le module de ventilation comprend un ventilo-convecteur équipé d'un plénum de soufflage d'air neuf, un conduit d'apport de l'air extérieur aménagé par réservation à travers le mur et les couches du dispositif.

Le module d'isolation thermique peut être recouvert à l'aide d'une couche de protection étanche.

L'invention concerne également un dispositif selon la revendication 14.

Avantageusement, la profondeur des rainures est égale au diamètre des conduits associés

Avantageusement encore, les conduits sont maintenus à l'aide d'au moins une barre de blocage fixée à chacune de leurs extrémités sur la plaque de réception.

Un tout premier avantage de la présente invention réside dans l'élimination de toute intervention lourde à l'intérieur de l'immeuble.

Un autre avantage de l'invention réside dans la simplicité de réalisation qui implique la majorité des interventions à l'extérieur de l'immeuble.

Un autre avantage de l'invention réside dans le fait de déporter à l'extérieur tout le réseau de fluides et de limiter les gaines à l'intérieur.

Un autre avantage encore de l'invention réside dans la réduction de l'impact sur le bâtiment (absence de trémie, pas de démolition), la réduction de la complexité des travaux impactant les délais et les coûts, et la réduction des nuisances.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente une vue en perspective de la plaque de réception,
- la figure 2 représente une vue de la plaque de réception équipée de différents conduits,
- la figure 3 représente une coupe de la plaque de réception au niveau d'une rangée de plots,
- la figure 4 est une coupe montrant l'insertion d'un groupe moto-ventilateur,
- les figures 5 illustrent une vue d'un autre mode de réalisation de l'invention, et
- les figures 6 illustrent une autre vue de cet autre mode de réalisation.

L'invention va être décrite maintenant avec plus de détail.

Les plots tels que décrits dans un mode de réalisation de l'invention délimitent des espaces dans lesquels les conduits sont disposés. Une réalisation équivalente consiste à prévoir une plaque suffisamment épaisse sur laquelle des rainures sont pratiquées pour délimiter lesdits espaces.

Le mode de fabrication de la plaque comportant des rainures ne diffère pas de celui de la plaque comportant des plots. L'effet technique des deux plaques reste identique. A savoir, l'insertion de conduits de maintien en température sur la face interne de la plaque et l'insertion de conduits d'apport de fluide sur le côté externe.

Plus précisément, l'effet technique des rainures tout comme celui des plots est de délimiter des espaces libres au niveau de la plaque de réception de façon à y introduire des conduits.

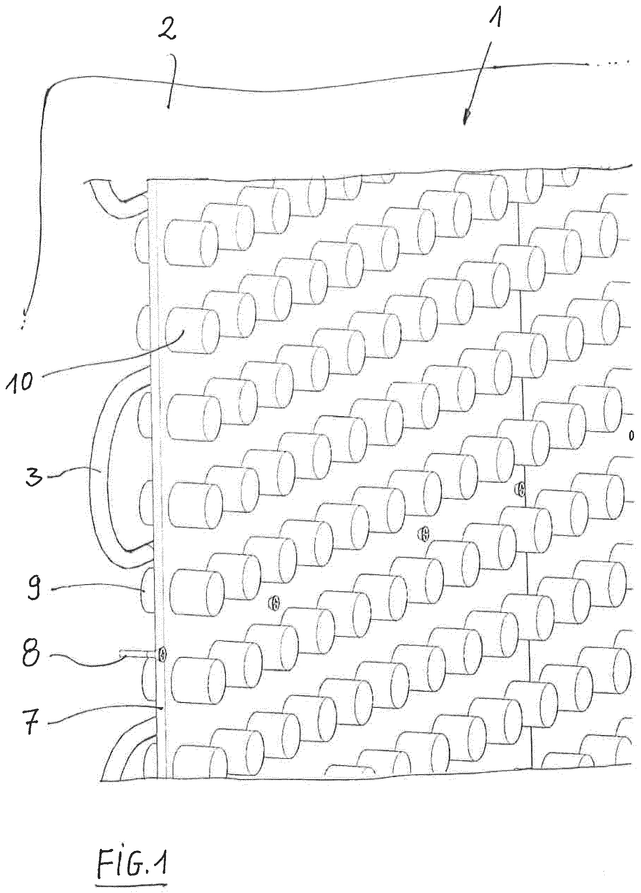

Sur la figure 1, on a représenté une vue du dispositif de réception 1 des différents conduits de circulation des fluides. Les dimensions de ce dispositif sont bien entendu ajustées de façon à constituer pour un immeuble 1 donné un module unitaire utilisable pour l'ensemble de la surface de l'immeuble. Ainsi, la surface de l'immeuble 1 est recouverte et protégée par l'assemblage de modules fixé en continu les uns à la suite des autres.

Il va de soi que l'immeuble est représenté partiellement sur la figure.

Le dispositif 1 est donc constitué d'une plaque de réception 7 destinée à être fixée à distance sur la façade de l'immeuble. Cette plaque 7 est munie de part et d'autre de plots 9 et 10. Ces plots 9 et 10 sont disposés espacés en ligne et en colonne afin de délimiter des espaces transversaux et longitudinaux. Chaque plaque 7 est fixée sur la façade de l'immeuble par l'intermédiaire de pions 8 de fixation disposés régulièrement afin de fixer solidement ladite plaque. On définira pour la suite les plots internes 9 ceux qui sont appliqués contre l'immeuble 2 et les plots externes 10 ceux dirigés vers l'extérieur.

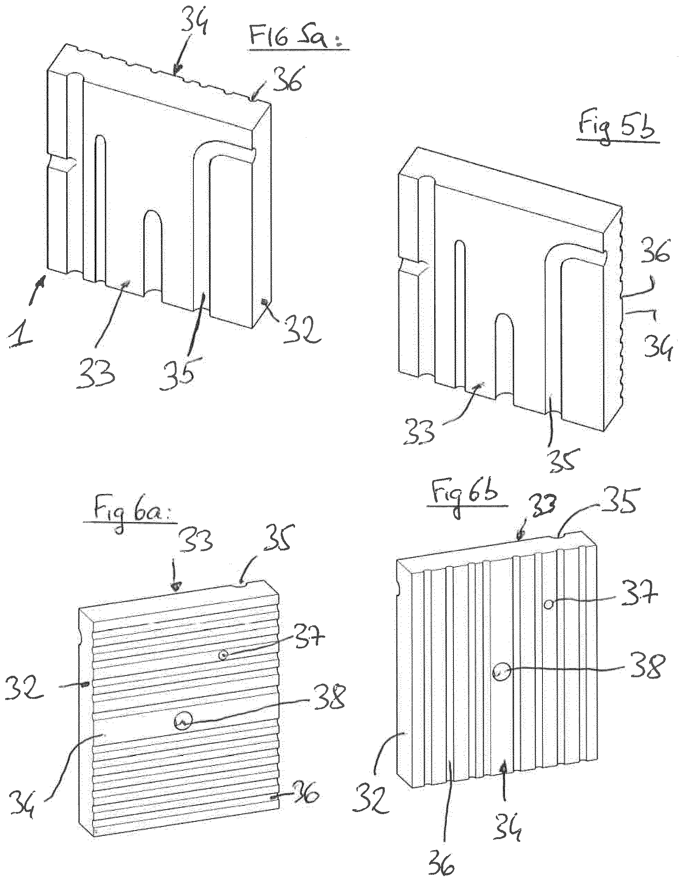

De la même manière et comme illustré sur la figure 5a, le dispositif 1 est constitué d'une plaque de réception 32 suffisamment épaisse destinée à être fixée à distance sur la façade d'un immeuble. L'épaisseur de cette plaque peut par exemple être de l'ordre de 8 à 15 cm. Cette plaque 32 est munie au niveau de deux de ses parois opposées 33 et 34 des rainures respectives 35 et 36. Ces rainures 33 et 34 délimitent des espaces ou logements transversaux et/ou horizontaux. La plaque 32 est représentée avec la paroi 33 entièrement visible.

Chaque plaque 32 est fixée sur la façade de l'immeuble par l'intermédiaire de pions de fixation (non représentés sur la figure) disposés régulièrement afin d'y fixer solidement ladite plaque. On définira pour la suite les rainures internes 36 comme étant celles situées sur la paroi 34 de la plaque 32 en vis-à-vis de l'immeuble et les rainures externes 35 comme étant celles situées sur la paroi opposée 33.

Sur la figure 5b, on voit que les rainures 35 et 36 sont pratiquées selon deux directions perpendiculaires entre elles alors qu'elles sont orientées suivant la même direction selon la figure 5a.

Sur la figure 6a, on a représenté la plaque 32 avec la paroi 34 entièrement visible. On distingue également des perçages 37 et 38 permettant aux conduits d'apports d'autre fluides d'être acheminés à l'intérieur de l'immeuble. Sur cette figure 6a, les rainures sont disposées suivant deux directions perpendiculaires alors qu'elles sont disposées sur la figure 6b suivant la même direction.

La plaque 7 équipée de ses plots 9 et 10 peut être réalisée en n'importe matériau isolant pourvu qu'il assure l'isolation thermique et la rigidité nécessaires. Ainsi, la plaque peut être réalisée en une matière synthétique ou naturelle du type polystyrène extrudé, fibres de bois, laine de roche, et, ce, en une seule étape suivant des dimensions standards.

De la même manière, la plaque 32 peut être réalisée en n'importe quel matériau isolant thermique. L'usinage de rainures dans les plaques de réception 32 permet l'utilisation d'une large gamme de matériaux pour la fabrication de ladite plaque. Ce qui permet d'adapter les matériaux en fonction des attentes énergétiques des immeubles à rénover ou à construire.

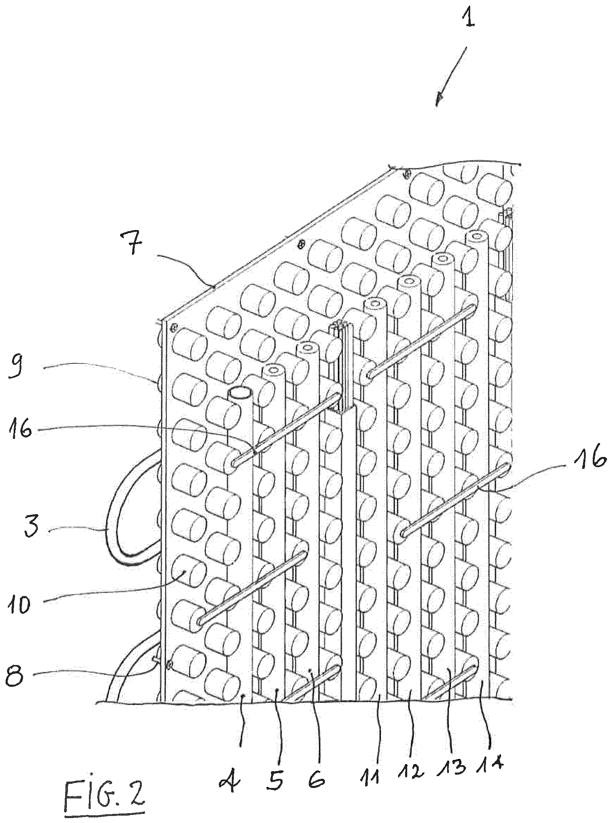

Sur la figure 2, on a représenté l'insertion d'un conduit 3 entre les plots 9 qui est avantageusement un conduit de maintien en température. Ce conduit 3 est par exemple destiné au chauffage des différents appartements de l'immeuble 1 ou bien à leur rafraîchissement. A cette fin, ce conduit 3 est appliqué de manière intime sur la façade du bâtiment, et pour cela, on prévoit d'ajuster son diamètre à la hauteur des plots 9.

De la même manière, le conduit 3 (non représenté sur la figure) peut être inséré dans les rainures 36 de la plaque de réception 32. Ce conduit 3 est par exemple destiné au chauffage des différents appartements de l'immeuble 1 ou bien à leur rafraîchissement. A cette fin, ce conduit 3 est appliqué de manière intime sur la façade du bâtiment, et pour cela, on prévoit d'ajuster la profondeur des rainures 33 au diamètre du conduit 3.

Le conduit 3 se présente sous la forme d'un serpentin inséré entre les plots internes 9. Ce conduit 3 forme bien entendu une boucle dont les extrémités sont reliées à une source énergétique. Cette liaison est classique et il n'est pas nécessaire de la décrire plus en détail.

Au niveau de l'autre face de la plaque 7, du côté externe, on insère entre les plots 10 différents conduits. Le nombre de conduits n'est pas limité et dépend de l'importance de la rénovation. Ces conduits sont bien entendu disposés verticalement ou horizontalement et alignés suivant une génératrice de la plaque 7 dans le réseau créé par les plots 10. Il va de soi que ces conduits peuvent subir des directions variées selon les contraintes de cheminement.

De la même manière et sur la plaque 32, différents conduits sont insérés dans les rainures 35. Le nombre de conduits n'est pas limité et dépend de l'importance de la rénovation. Ces conduits sont bien entendu disposés verticalement ou horizontalement et alignés suivant une génératrice de la plaque 32 dans le réseau créé par les rainures 35. Il va de soi que ces conduits peuvent subir des directions variées selon les contraintes de cheminement. Il va également de soi que la profondeur des rainures 35 est adaptée au diamètre des conduits destinés à y être insérés.

A titre d'exemple, ces conduits peuvent être un conduit 4 pour l'eau froide sanitaire, un conduit 5 pour l'eau chaude sanitaire, un conduit 6 d'élimination des eaux usées, un conduit 11 pour amener l'eau glacée, un conduit 12 pour ramener l'eau glacée, un conduit 13 pour l'eau chaude de chauffage et un conduit 14 pour le retour de l'eau chaude de chauffage. Ces conduits peuvent bien entendu être complétés par des conduits pour l'amenée des courants fort et faible, pour le gaz, etc...

Ces conduits 4, 5, 6, 11, 12, 13 et 14 sont bien entendu maintenus en place de manière rigide à l'aide de barres de blocage 16 fixées à chaque extrémité sur un plot 10 à l'aide par exemple d'une vis.

De la même manière, ces conduits 4, 5, 6, 11, 12, 13 et 14 sont bien entendu maintenus en place de manière rigide à l'aide de barres de blocage (non représentés sur les figures 5 et 6) fixées à chaque extrémité sur la plaque 32 à l'aide par exemple d'une vis.

La plaque 7 est ensuite équipée d'un module d'isolation thermique 15. Si nécessaire et pour accroître l'efficacité thermique et atteindre les exigences demandées un isolant thermique peut être inséré dans les intervalles séparant les différents plots externe pour respecter le réglementation thermique. La finition est réalisée par application sur la plaque 7 d'un revêtement de protection.

On comprend aisément que les conduits 4 alimentent les différents points d'utilisation à l'intérieur du bâtiment et le conduit 6 est relié à une évacuation pour l'élimination des eaux usées dans les égouts collectifs ou les systèmes de traitement des eaux usées et de récupération d'énergie.

Les conduits 11-14 sont prévus pour assurer un complément d'apport de calories ou de frigories à l'intérieur du bâtiment. A cet effet, les conduits 11-14 sont reliés à un module de ventilation 101 pour le réglage de la température d'une pièce de l'immeuble. Suivant les besoins, il est nécessaire d'apporter soit un complément de calories par l'intermédiaire des conduits 11 et 12, soit un complément de frigories par l'intermédiaire des conduits 13 et 14.

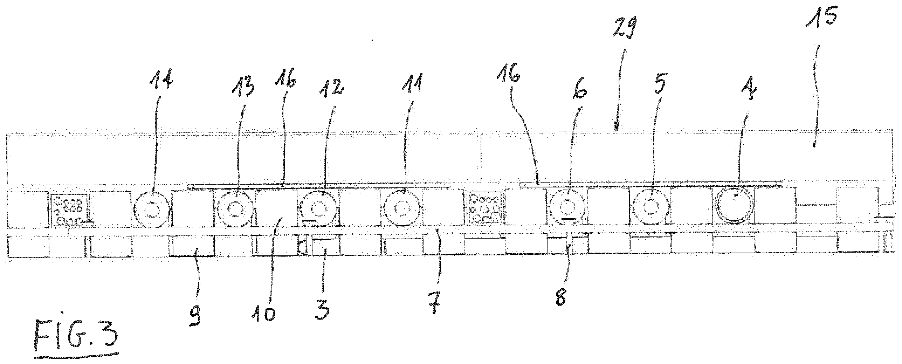

Sur la figure 3, on a représenté une coupe pratiquée au niveau d'une rangée de plots 9 et 10 montrant l'insertion des différents conduits au niveau de la plaque 7. On retrouve le conduit 3 disposé entre les plots 9 et les conduits 4-6 et 11-14 disposés entre les plots 10 et maintenus par la barre 16. On voit que les différents conduits 4-6 et 11-14 sont équipés d'un calorifugeage en contact intime avec les plots. On voit encore le module d'isolation thermique 15 qui est fixé sur les plots 10 à l'aide d'attaches de façon connue.

La plaque 7 est ensuite équipée d'un module d'isolation thermique 15. La finition est réalisée par application sur la plaque 7 d'un revêtement de protection 29.

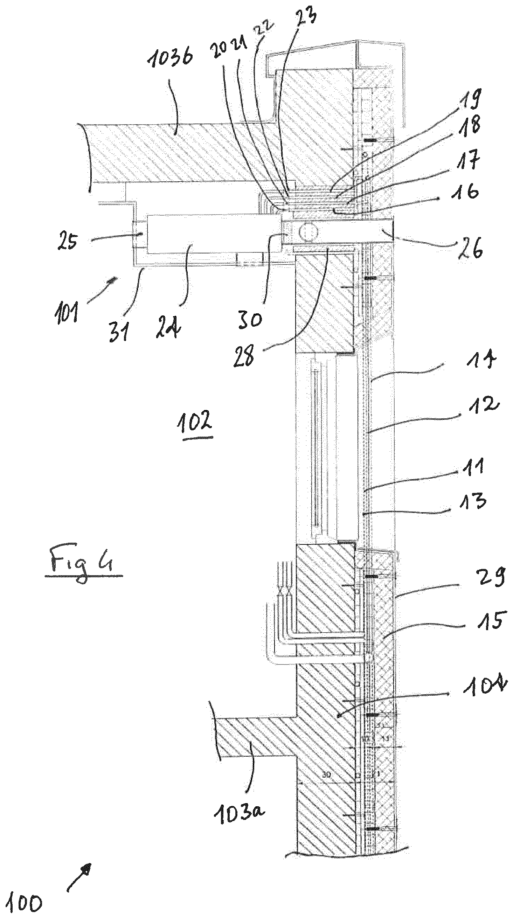

Sur la figure 4, on a représenté un exemple de réalisation de cette configuration 100 équipant une pièce 102 supérieure d'un bâtiment délimitée par le plancher 103a, le plafond 103b et le mur extérieur 104. Ainsi, le module de ventilation 101 reçoit des conduits transversaux 16, 17, 18 et 19 avec respectivement les conduits 13, 11, 12 et 14. Ces conduits transversaux sont installés dans une ouverture pratiquée dans le mur 104 recevant une couche 28 d'un matériau isolant thermique lui-même recouvert d'une couche de protection. Ces conduits transversaux 16-18 sont reliés au module échangeur de ventilation 101 par l'intermédiaire des vannes d'isolement et régulation respectifs 20-23.

Le module de ventilation 101 comprend un ventilo-convecteur 24 équipé d'un plénum 25 de soufflage d'air neuf, un conduit 26 d'apport de l'air extérieur aménagé par une réservation dans le mur et les couches du dispositif et équipé d'un filtre 30 et des clapets coupe-feu si nécessaire. Le module de ventilation est habillé à l'aide d'un capotage 31.

Sur la figure, on voit que le module 101 est installé en partie haute de la pièce mais il va de soi qu'il peut être installé en tout point et notamment en partie basse.

Comme indiqué précédemment, on peut prévoir des conduits pour l'amenée des courants fort et faible, pour le gaz, etc... Ces conduits ne nécessitent pas une description particulière étant donné qu'ils sont reliés directement aux installations existantes pour information des consommations (comptage et renvoi par la façade).

Dans la description ci-dessus, on a prévu une disposition verticale des conduits. Il va sans dire qu'une disposition horizontale peut être tout à fait adoptée suivant la configuration du bâtiment.

## Revendications

1. Dispositif destiné à la rénovation d'un immeuble, le dispositif comprenant un ensemble de conduits (3, 4-6, 11-14) pour fluides constitués d'un conduit (3) de maintien en température et de conduits d'apport d'autres fluides (4-6, 11-14) ainsi qu'un dispositif de fixation (1) desdits conduits (3,4-6,11-14) sur la façade extérieure de l' immeuble, le dispositif de fixation (1) comprenant une plaque de réception (7) fixée à distance sur la façade (2) extérieure de l' immeuble par l'intermédiaire de pions de fixation (8), la plaque (7) étant munie de part et d'autre de plots internes et externes (9, 10) espacés les uns des autres pour recevoir du côté interne le conduit de maintien en température (3) et du côté externe les conduits d'apport d'autres fluides (4-6, 11-14).

2. Dispositif selon la revendication 1, **caractérisé en ce que** le conduit de maintien en température (3) se présente sous la forme d'un serpentin inséré entre les plots internes (9).

3. Dispositif selon la revendication 1 ou 2, **caractérisé en ce que** les conduits d'apport (4-6, 11-14) sont insérés entre les plots externes (10) alignés sur une génératrice de la plaque (7).

4. Dispositif selon l'une quelconque des revendications 1 à 3, **caractérisé en ce que** l'ensemble des conduits (4-6 ; 11-14) d'apport sont notamment les conduits d'eau froide (4, 11, 12), d'eau chaude (5, 12, 13), de gaz, de conducteurs électriques.

5. Dispositif selon la revendication 3 ou 4, **caractérisé en ce que** les conduits (4-6 ; 11-14) sont maintenus à l'aide d'au moins une barre de blocage (16) fixée à chacune de leurs extrémités sur un plot (10).

6. Dispositif selon l'une quelconque des revendications précédentes, **caractérisé en ce que** la plaque de réception (7) se présente sous la forme d'une plaque isolant thermique rigide de polystyrène extrudé d'un seul bloc avec les plots internes et externes.

7. Dispositif selon la revendication 6, **caractérisé en ce que** les plots (9, 10) se présentent sous la forme d'éléments cylindriques.

8. Dispositif selon la revendication 2 ou 3, **caractérisé en ce que** la hauteur des plots internes (9) et externes (10) est égale au diamètre des conduits insérés entre ceux-ci.

9. Dispositif selon l'une quelconque des revendications précédentes, **caractérisé en ce qu'**il comporte un module d'isolation thermique (15) muni d'un échangeur fixé à la plaque de réception.

10. Dispositif selon l'une quelconque des revendications précédentes, **caractérisé en ce qu'**il comprend des conduits transversaux (16,17,18,19) et un module de ventilation (101) pour le réglage de la température d'une pièce de l'immeuble auquel sont connectés les conduits eau chaude (13), eau glacée (11), retour eau glacée (12) et retour eau chaude (14) par l'intermédiaire desdits conduits transversaux respectifs (16, 17, 18, 19).

11. Dispositif selon la revendication 10, **caractérisé en ce que** les conduits transversaux (16-18) sont reliés au module de ventilation par l'intermédiaire des vannes d'isolement respectives (20-23) .

12. Dispositif selon la revendication 10 ou 11, **caractérisé en ce que** le module de ventilation (101) comprend un ventilo-convecteur (24) équipé d'un plénum (25) de soufflage d'air neuf, un conduit (26) d'apport de l'air extérieur aménagé par réservation à travers un mur et le dispositif.

13. Dispositif selon la revendication 9, **caractérisé en ce que** le module d'isolation thermique (15) est recouvert à l'aide d'une couche de protection étanche.

14. Dispositif destiné à la rénovation d'un immeuble, le dispositif comprenant un ensemble de conduits (3, 4-6, 11-14) pour fluides constitués d'un conduit (3) de maintien en température et de conduits d'apport d'autres fluides (4-6, 11-14) ainsi qu'un dispositif de fixation (1) desdits conduits (3, 4-6, 11-14) sur la façade extérieure de l'immeuble, le dispositif de fixation (1) comprenant une plaque de réception (32) fixée à distance sur ladite façade par l'intermédiaire de pions (8) de fixation, plaque munie au niveau de deux de ses parois opposées (33, 34) de rainures respectives (35, 36) destinées à recevoir sur la paroi (33) le conduit (3) de maintien en température et sur l'autre paroi (34) les conduits ((4-6, 11-14) d'apport d'autres fluides.

15. Dispositif selon la revendication 14, **caractérisé en ce que** la profondeur des rainures (35, 36) est égale au diamètre des conduits associés.

## Patentansprüche

1. Vorrichtung, welche für die Renovierung eines Gebäudes vorgesehen ist, wobei die Vorrichtung eine Baugruppe von Leitungen (3, 4-6, 11-14) für Fluide, welche aus einer Leitung (3) zum Halten der Temperatur und Leitungen zur Zufuhr anderer Fluide (4-6, 11-14) besteht, sowie eine Vorrichtung zur Befestigung (1) der genannten Leitungen (3, 4-6, 11-14) an der Außenfassade des Gebäudes aufweist, wobei die Befestigungsvorrichtung (1) eine Aufnahmeplatte (7) aufweist, welche mit Abstand an der Außenfassade (2) des Gebäudes durch Befestigungsstifte (8) befestigt ist, wobei die Platte (7) beiderseits mit inneren und äußeren, voneinander beabstandeten Zapfen (9, 10) versehen ist, um an der Innenseite die Leitung zum Halten der Temperatur (3) und an der Außenseite die Leitungen zur Zufuhr anderer Fluide (4-6, 11-14) aufzunehmen.

2. Vorrichtung nach Anspruch 1, **dadurch gekennzeichnet, dass** die Leitung zum Halten der Temperatur (3) sich in der Form einer Schlangenlinie darstellt, welche zwischen die inneren Zapfen (9) eingefügt ist.

3. Vorrichtung nach Anspruch 1 oder 2, **dadurch gekennzeichnet, dass** die Zufuhrleitungen (4-6, 11-14) zwischen die äußeren Zapfen (10) eingefügt sind, welche auf einer Mantellinie der Platte (7) ausgerichtet sind.

4. Vorrichtung nach irgendeinem der Ansprüche 1 bis 3, **dadurch gekennzeichnet, dass** die Baugruppe von Zufuhrleitungen (4-6; 11-14) insbesondere Leitungen für kaltes Wasser (4, 11, 12), warmes Wasser (5, 12, 13), Gas und elektrische Leiter sind.

5. Vorrichtung nach Anspruch 3 oder 4, **dadurch gekennzeichnet, dass** die Leitungen (4-6; 11-14) mit Hilfe von mindestens einer Arretierstange (16) gehalten werden, welche an ihren Enden jeweils auf einem Zapfen (10) befestigt ist.

6. Vorrichtung nach irgendeinem der vorhergehenden Ansprüche, **dadurch gekennzeichnet, dass** die Aufnahmeplatte (7) sich in der Form einer starren, thermisch isolierenden Platte aus Polystyrol darstellt, welche in einem Stück mit den inneren und äußeren Zapfen extrudiert ist.

7. Vorrichtung nach Anspruch 6, **dadurch gekennzeichnet, dass** sich die Zapfen (9, 10) in der Form von zylindrischen Elementen darstellen.

8. Befestigungsvorrichtung (1) nach Anspruch 2 oder 3, **dadurch gekennzeichnet, dass** die Höhe der inneren (9) und äußeren (10) Zapfen gleich dem Durchmesser der zwischen ihnen eingefügten Leitungen ist.

9. Vorrichtung nach irgendeinem der vorhergehenden Ansprüche, **dadurch gekennzeichnet, dass** sie ein Modul zur thermischen Isolierung (15) umfasst, welches mit einem an der Aufnahmeplatte befestigten Tauscher versehen ist.

10. Vorrichtung nach irgendeinem der vorhergehenden Ansprüche, **dadurch gekennzeichnet, dass** sie querverlaufende Leitungen (16, 17, 18, 19) und ein Lüftungsmodul (101) für die Regelung der Temperatur eines Zimmers des Gebäudes aufweist, mit welchem die Leitungen für Warmwasser (13), Eiswasser (11), Rücklauf Eiswasser (12) und Rücklauf Warmwasser (14) über die genannten jeweiligen querverlaufenden Leitungen (16, 17, 18, 19) verbunden sind.

11. Vorrichtung nach Anspruch 10, **dadurch gekennzeichnet, dass** die querverlaufenden Leitungen (16-18) durch jeweilige Absperrventile (20-23) mit dem Lüftungsmodul verbunden sind.

12. Vorrichtung nach Anspruch 10 oder 11, **dadurch gekennzeichnet, dass** das Lüftungsmodul (101) einen Ventilator-Konvektor (24), welcher mit einem Plenum (25) zum Einblasen von Frischluft ausgerüstet ist, und eine Leitung (26) zur Zufuhr der Außenluft aufweist, welche durch eine Aussparung durch eine Wand und die Vorrichtung hindurch angeordnet ist.

13. Vorrichtung nach Anspruch 9, **dadurch gekennzeichnet, dass** das Modul zur thermischen Isolation (15) mit Hilfe einer wasserdichten Schutzschicht überzogen ist.

14. Vorrichtung, welche für die Renovierung eines Gebäudes vorgesehen ist, wobei die Vorrichtung eine Baugruppe von Leitungen (3, 4-6, 11-14) für Fluide, welche aus einer Leitung (3) zum Halten der Temperatur und Leitungen zur Zufuhr anderer Fluide (4-6, 11-14) besteht, sowie eine Vorrichtung zur Befestigung (1) der genannten Leitungen (3, 4-6, 11-14) an der Außenfassade des Gebäudes aufweist, wobei die Befestigungsvorrichtung (1) eine Aufnahmeplatte (32) aufweist, welche mit Abstand an der genannten Außenfassade durch Befestigungsstifte (8) befestigt ist, wobei die Platte im Bereich ihrer beiden gegenüberliegenden Wände (33, 34) mit jeweiligen Nuten (35, 36) versehen ist, welche dafür vorgesehen sind, um an der Wand (33) die Leitung (3) zum Halten der Temperatur und an der anderen Wand (34) die Leitungen (4-6, 11-14) zur Zufuhr anderer Fluide aufzunehmen.

15. Vorrichtung nach Anspruch 14, **dadurch gekennzeichnet, dass** die Tiefe der Nuten (35, 36) gleich dem Durchmesser der zugeordneten Leitungen ist.

## Claims

1. Device intended for the renovation of a building, device comprising a set of ducts (3, 4-6, 11-14) for fluids constituted by a temperature maintenance duct (3) and ducts to supply other fluids (4-6, 11-14) as well as a device (1) to attach said ducts (3, 4-6, 11-14) onto the outer façade of the building, said attachment device (1) comprising a receiver plate (7) attached at a distance on the outer façade (2) by means of mounting studs (8), the plate (7) being equipped on either side by inner and outer mounting studs (9, 10) spaced at a distance from one another to receive on the inner side the temperature maintenance duct (3) and on the outer side the ducts (4-6, 11-14) to supply other fluids.

2. Device according to Claim 1, wherein the temperature maintenance duct (1) is in the form of a coil inserted between the inner studs (9).

3. Device according to Claims 1 or 2, wherein the supply ducts (4-6, 11-14) are inserted between the outer studs (10) aligned along a generatrix of the plate (7).

4. Device according to any one of Claims 1 to 3, wherein all the supply ducts (4-6, 11-14) are namely cold-water ducts (4, 11, 12), hot water ducts (5, 12, 13), gas ducts and electric conductors.

5. Device according to Claim 3 or 4, wherein the ducts (4-6; 11-14) are held in place by at least one blocking bar (16) attached to each of their extremities on a stud (10).

6. Device according to any one of the above Claims, wherein the receiver plate (7) is in the form of a rigid thermally insulating sheet of extruded polystyrene in a single piece with the inner and outer studs.

7. Device according to Claim 6, wherein the studs (9, 10) are in the form of cylindrical elements.

8. Device according to Claim 2 or 3, wherein the height of the inner studs (9) and outer studs (10) is equal to the diameter of the ducts inserted between them.

9. Device according to any one of the previous Claims, wherein it incorporates a thermally insulating module (15) equipped with an exchanger attached to the receiver plate.

10. Device according to any one of the previous Claims, wherein it comprises transversal ducts (16, 17, 18, 19) and a ventilation module (101) to adjust the temperature in a room of the building to which the hot water ducts (13), iced water ducts (11), iced water return ducts (12) and hot water return ducts (14) are connected by means of said transversal ducts, respectively (16, 17, 18, 19).

11. Device according to Claim 10, wherein the transversal ducts (16-18) are linked to the ventilation modules by means of isolation valves, respectively (20-23).

12. Device according to Claim 10 or 11, wherein the ventilation module (101) comprises a fan-coil (24) equipped with a fresh air blower plenum (25), an external air supply duct (26) fitted through a reservation in a wall and the device.

13. Device according to Claim 9, wherein the thermally insulating module (15) is covered by a water-tight protective layer.

14. Device intended for the renovation of a building, the device comprising a set of ducts (3, 4-6, 11-14) for fluids constituted by a temperature maintenance duct and supply ducts for other fluids (4-6, 11-14) as well as an attachment device (1) for said ducts (3, 4-6, 11-14) on the external façade of the building, the attachment device (1) comprising a receiver plate (32) attached at a distance on said façade by means of fastening studs (8), plate equipped on two opposing sides (33, 34) with grooves respectively (35, 36) intended to receive on one side (33) the temperature maintenance duct (3) and on the other side (34) the supply ducts (4-6; 11-14) for other fluids.

15. Device according to Claim 14, wherein the depth of the grooves (35, 36) is equal to the diameter of the associated ducts.
